# EUROPÄISCHE PATENTANMELDUNG

(11) **EP 4 470 698 A1**
(43) Veröffentlichungstag der Anmeldung: **04.12.2024**
(21) Anmeldenummer: 23176882.1
(22) Anmeldetag: 02.06.2023
(51) Int. Cl.: B23D 57/00

(54) **SEILSÄGE UND VERFAHREN ZUM BETRIEB EINER SEILSÄGE**

(71) Anmelder: Hilti Aktiengesellschaft, 9494 Schaan (LI)
(72) Erfinder: Rieger, Hans-Joerg, 6712 Thueringen (AT); Plattner, David, 6200 Gallzein (AT)
(74) Vertreter: Hilti Aktiengesellschaft Corporate Intellectual Property

(57) **Zusammenfassung**

Die vorliegende Erfindung betrifft eine Seilsäge (10) mit einem Seilantrieb (12) und einem Seilspeicher (14) für ein Sägeseil (16), wobei die Seilsäge (10) mindestens drei Antriebsräder (20, 22, 24) zur Übertragung einer Antriebskraft auf ein Sägeseil (16) der Seilsäge (10) aufweist, wobei eine Anzahl der Antriebsräder (20, 22, 24), die in Kontakt mit dem Sägeseil (16) stehen, unabhängig ist von einer Belegung des Seilspeichers (14). In einem zweiten Aspekt betrifft die Erfindung ein Verfahren zum Betrieb einer solchen Seilsäge (10). Durch die Erfindung kann eine besonders leistungsstarke, aber gleichzeitig kompakte Seilsäge bereitgestellt werden.

## Beschreibung

Die vorliegende Erfindung betrifft eine Seilsäge mit einem Seilantrieb und einem Seilspeicher für ein Sägeseil, wobei die Seilsäge mindestens drei Antriebsräder zur Übertragung einer Antriebskraft auf ein Sägeseil der Seilsäge aufweist, wobei eine Anzahl der Antriebsräder, die in Kontakt mit dem Sägeseil stehen, unabhängig ist von einer Belegung des Seilspeichers. In einem zweiten Aspekt betrifft die Erfindung ein Verfahren zum Betrieb einer solchen Seilsäge. Durch die Erfindung kann eine besonders leistungsstarke, aber gleichzeitig kompakte Seilsäge bereitgestellt werden.

### Hintergrund der Erfindung:

Im Stand der Technik sind Seilsägen bekannt, mit denen große Schnitte, beispielsweise in Wände, eingebracht werden können. Seilsägen verfügen üblicherweise über ein als Endlos-Sägeseil ausgebildetes Sägeseil, das im Inneren der Seilsäge über verschiedene Antriebsräder oder Rollen geführt und gespannt wird. Zumindest ein Teil dieser Rollen und Antriebsräder bilden einen Seilspeicher, in dem das Sägeseil gespeichert werden kann. Ferner kann im Innern der Seilsäge ein Spann- und Spreizmechanismus vorgesehen sein, mit dem das Sägeseil straff gehalten wird. Das Sägeseil ist im Laufe seiner Benutzung großen mechanischen Belastungen ausgesetzt, wobei insbesondere eine gleichmäßige Abnutzung des Sägeseils angestrebt wird.

Durch konstruktive Maßnahmen kann beispielsweise die Wahrscheinlichkeit bzw. das Risiko für ein unerwünschtes Zerreißen des Sägeseils reduziert werden. Die Rollen bzw. Umlenkrollen des Seilspeichers der Seilsäge weisen Führungsnuten als Laufrillen auf, wobei das Sägeseil vorzugsweise in diesen Laufrillen geführt wird.

Zur Überwindung der beim Schneiden entstehenden Schnittkräfte müssen die Antriebsräder in der Lage sein, die beim Schneiden entstehenden Reibkräfte zu überwinden. Damit das Sägeseil und die Antriebsräder nicht durch eine Überlastung beschädigt werden, muss die durch einen Antriebsmotor der Seilsäge erzeugte Zugkraft auf ein ausreichend langes Seilstück bzw. auf eine ausreichend lange Antriebsradkontaktlänge übertragen werden. Im Stand der Technik wurde zur Bereitstellung einer ausreichend großen Kontaktlänge zwischen dem Sägeseil und den Antriebsrädern vorgeschlagen, möglichst große Antriebsräder zu verwenden. Allerdings hat sich gezeigt, dass die Seilsäge dadurch sehr groß und unhandlich wird. Darüber hinaus müssen zum Antrieb von großen Antriebsrädern mit großen Durchmessern häufig auch große Antriebsmotoren oder Getriebemotoren verwendet werden, die das erforderliche Bauvolumen weiter in die Höhe treiben. Außerdem hat sich herausgestellt, dass große Motoren und Getriebemotoren häufig in kleineren Stückzahlen produziert werden als kleinere Motoren ohne Getriebe, so dass die großen Antriebsmotoren oder Getriebemotoren häufig überproportional teuer im Einkauf sind.

Aus der EP 1 251 990 B1 ist eine Seilsäge mit zwei Rollenbatterien bekannt, wobei die Rollenbatterien mehrere axial nebeneinander liegende Rollen umfassen können. Allerdings kann bei der in der EP 1 251 990 B1 beschriebenen Lösung der Nachteil auftreten, dass sich die Kontaktlänge, auf die die Antriebskraft übertragen wird, mit einer zunehmenden Anzahl von belegten Speicherebenen verändert. Dadurch kann es - vor allem bei einer geringen Belegung des Seilspeichers - zu einer unerwünscht hohen Belastung des Sägeseils bzw. der Antriebsräder der Seilsäge kommen.

Die Fachwelt würde es begrüßen, wenn die genannten Mängel und Nachteile des Standes der Technik überwunden werden könnten und eine Seilsäge bereitgestellt werden könnte, die einerseits besonders leistungsstark ist, andererseits aber auch kostengünstig in der Herstellung und kompakt und leicht in der Handhabung.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Seilsäge mit einem Seilantrieb und einem Seilspeicher für ein Sägeseil vorgesehen. Die Seilsäge weist mindestens drei Antriebsräder zur Übertragung einer Antriebskraft auf ein Sägeseil auf, wobei eine Anzahl der Antriebsräder, die in Kontakt mit dem Sägeseil stehen, unabhängig ist von einer Belegung des Seilspeichers. Mit der Erfindung kann eine besonders leistungsstarke, aber gleichzeitig kompakte Seilsäge bereitgestellt werden. Das Merkmal, wonach _eine Anzahl der Antriebsräder, die in Kontakt mit dem Sägeseil stehen, unabhängig ist von einer Belegung des Seilspeichers, bedeutet im Sinne der Erfindung bevorzugt, dass die Anzahl der Antriebsräder nicht von der Anzahl der belegten Seilspeicherebenen abhängt. Es ist im Sinne der Erfindung bevorzugt, dass der Seilspeicher ähnlich wie ein Flaschenzug funktioniert. Durch eine Vergrößerung des Abstands von gegenüberliegenden Rollenpaaren kann Seil vom Speicher aufgenommen werden. Je mehr gegenüberliegende Rollenpaare vorhanden sind, desto mehr Seil kann der Speicher über eine definierte Abstandsvergrößerung aufnehmen.

Es hat sich gezeigt, dass mit der Erfindung eine Seilsäge bereitgestellt werden kann, die einerseits besonders leistungsstark ist, andererseits aber auch kompakt und leicht in der Handhabung. Dieser Vorteil der vorgeschlagenen Seilsäge wird insbesondere durch die Vorsehung von mindestens drei Antriebsrädern erreicht. Denn die Erfinder haben erkannt, dass die Kontaktlänge des Sägeseils, d.h. die Länge des Sägeseils, das mit einem Antriebsrad in Kontakt vorliegt, vorteilhafterweise auch durch die Anzahl der Antriebsräder beeinflusst werden kann. Daher kann mit der vorgeschlagenen Seilsäge mit den mindestens drei Antriebsrädern eine überraschend große Kontaktlänge und somit eine besonders starke Seilsäge bereitgestellt werden, die gleichzeitig besonders kompakt ausgebildet ist. Die einzelnen Antriebsräder der Seilsäge müssen für sich betrachtet jeweils nicht besonders groß sein oder einen großen Durchmesser aufweisen. Insofern können im Kontext der vorliegenden Erfindung Antriebsmotoren verwendet werden, die häufig in großer Stückzahl und zu günstigen Preisen angeboten werden. Die geringen Durchmesser der einzelnen Antriebsräder führen vorteilhafterweise dazu, dass die Antriebsräder innerhalb der Seilsäge besonders raumsparend angeordnet sein können, wie weiter unten ausgeführt wird. Dadurch kann eine besonders kompakte Seilsäge bereitgestellt werden.

Es ist im Sinne der Erfindung bevorzugt, dass das Sägeseil mit den Antriebsrädern in Kontakt vorliegt. Ein Kontakt zwischen Sägeseil und Antriebsrad wird vorzugsweise durch eine Berührung des Sägeseils und des Antriebsrads erzeugt. Beispielweise kann das Sägeseil in einer auf dem Umfang eines Antriebsrads verlaufenden Nut bzw. Laufrille aufgenommen vorliegen. Durch einen solchen Verlauf des Sägeseils in einer Nut oder Laufrille der Antriebsräder der Seilsäge kann beispielsweise ein Kontakt zwischen Sägeseil und Antriebsrad hergestellt werden. Der Abschnitt des Sägeseils, der in Kontakt mit einem Antriebsrad vorliegt, kann eine Länge aufweisen, die im Sinne der Erfindung bevorzugt als «Kontaktlänge des Sägeseils» oder als «Antriebsradkontaktlänge» bezeichnet wird. Die Erfinder haben erkannt, dass die Kontaktlänge des Sägeseils, d.h. die Länge des Sägeseils, das mit einem Antriebsrad in Kontakt vorliegt, vorteilhafterweise auch durch die Anzahl der Antriebsräder beeinflusst werden kann.

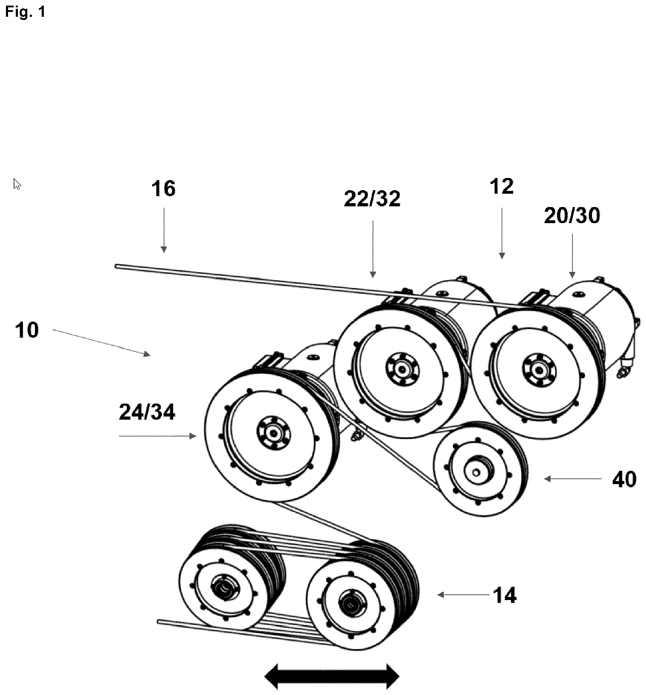

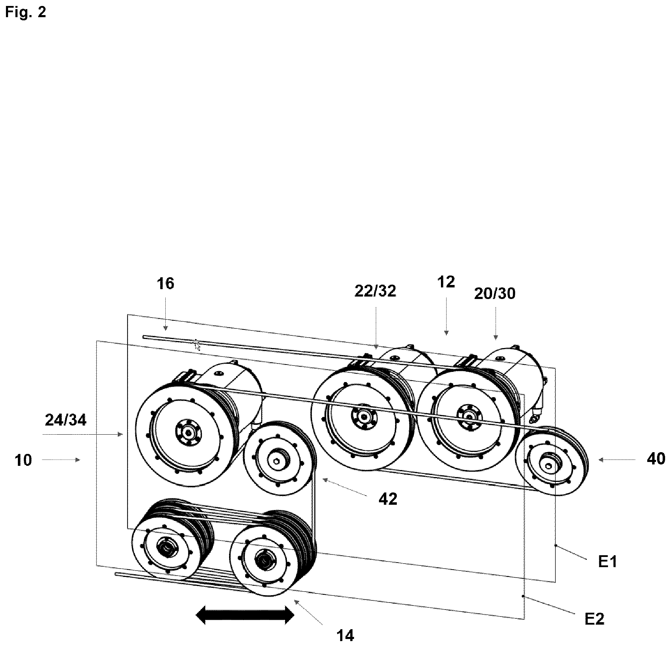

Es ist im Sinne der Erfindung bevorzugt, dass die mindestens drei Antriebsräder in einer Ebene angeordnet vorliegen. Die Lage einer solchen Ebene wird insbesondere in den Figuren verdeutlicht. In Figur 1 liegen die Antriebsräder in einer Ebene angeordnet vor. Im Gegensatz dazu liegen das erste und das zweite Antriebsrad in Figur 2 in einer Ebene vor, während das dritte Antriebsrad in einer zweiten Ebene angeordnet vorliegt. Die Umlenkung des Sägeseils auf die zweite Ebene kann beispielsweise durch eine schräg gestellte Umlenkrolle erreicht werden. Eine solche schräg gestellte Umlenkrolle ist beispielsweise in Figur 2 dargestellt, wobei die schräg gestellte Umlenkrolle mit dem Bezugszeichen 40 gekennzeichnet ist und im Sinne der Erfindung bevorzugt als "erste Umlenkrolle" bezeichnet wird.

Es ist im Sinne der Erfindung bevorzugt, dass mindestens zwei Antriebsräder in unterschiedlichen Ebenen angeordnet vorliegen. Eine solche Situation ist in Figur 2 dargestellt. Dabei kann eine erste Teilmenge der Antriebsräder auf einer ersten Seillaufebene angeordnet vorliegen, während eine zweite Teilmenge der Antriebsräder auf einer zweite Seillaufebene angeordnet vorliegt. Wenn die vorgeschlagene Seilsäge zwei Seillaufebenen umfasst, können jeweils ein oder zwei Antriebsräder auf einer Seillaufebene vorgesehen sein. Wenn die vorgeschlagene Seilsäge eine Seillaufebene umfasst, können alle drei Antriebsräder auf dieser einen Seillaufebene vorgesehen sein.

Es ist im Sinne der Erfindung bevorzugt, dass die Seilsäge für die Antriebsräder jeweils einen eigenen Antriebsmotor aufweist. Es ist im Sinne der Erfindung ganz besonders bevorzugt, dass jedem Antriebsrad der vorgeschlagenen Seilsäge ein Antriebsmotor zugeordnet werden kann. Die Seilsäge kann vorzugsweise drei Antriebsräder und drei Antriebsmotoren umfassen, wobei jeder der drei Antriebsmotoren je ein Antriebsrad antreibt. Mit anderen Worten können die Antriebsmotoren dazu eingerichtet sein, genau ein Antriebsrad anzutreiben. Wenn die Seilsäge vier, fünf oder sechs Antriebsräder aufweist, kann die Seilsäge auch vier, fünf oder sechs Antriebsmotoren aufweisen. Durch die bevorzugte 1:1-Zuordnung von Antriebsrädern und Antriebsmotoren kann eine besonders kompakte Anordnung der Antriebsräder und Antriebsmotoren und dadurch auch eine besonders kompakte Seilsäge bereitgestellt werden. Insbesondere können vergleichsweise kleine Antriebsräder und Antriebsmotoren verwendet werden und trotzdem eine überraschend leistungsstarke Seilsäge bereitgestellt werden. In einem ganz besonders bevorzugten Ausführungsbeispiel der Erfindung umfasst die Seilsäge drei Antriebsmotoren und drei Antriebsräder, wobei jedem Antriebsrad ein eigener Antriebsmotor zugeordnet werden kann.

Es ist im Sinne der Erfindung bevorzugt, dass die Antriebsmotoren der Seilsäge dazu eingerichtet sind, mehr als ein Antriebsrad anzutreiben. In dieser Ausgestaltung der Erfindung kann die Seilsäge mehr Antriebsräder als Antriebsmotoren umfassen. Beispielsweise kann ein Antriebsmotor alle drei Antriebsräder antreiben. Alternativ können zwei Antriebsmotoren vorgesehen sein, um drei oder vier Antriebsräder anzutreiben. Die Vorsehung von Antriebsmotoren, die in der Lage sind, mehr als ein Antriebsrad anzutreiben, kann eine alternative geschickte und raumsparende Anordnung von Antriebsrädern und Antriebsmotoren für die Seilsäge bereitgestellt werden.

Es ist im Sinne der Erfindung bevorzugt, dass die Antriebsräder ganz oder teilweise Bestandteil des Seilspeichers sind. Es ist im Sinne der Erfindung bevorzugt, dass zur Bildung einer Speicherebene zwei Rollen benötigt werden, deren axialer Abstand zueinander veränderlich ist. Wenn eine oder beide Rollen durch ein Antriebsrad gebildet werden, können so Rollen eingespart werden, da in diesem Fall vorteilhafterweise die Antriebsräder die Funktion von Speicherrädem übernehmen können.

Die Formulierung «ganz oder teilweise» bedeutet im Kontext der vorliegenden Erfindung bevorzugt, dass mindestens eines der mindestens drei Antriebsräder Bestandteil des Seilspeichers ist. Die Formulierung, dass «die Antriebsräder ganz oder teilweise» eine Eigenschaft aufweisen wird im Kontext der vorliegenden Erfindung vorzugsweise so verstanden, dass eines der Antriebsräder, zwei Antriebsräder, drei Antriebsräder oder alle Antriebsräder der Seilsäge diese Eigenschaft aufweisen. Mit anderen Worten können alle Antriebsräder oder eine Teilmenge aller Antriebsräder eine entsprechende Eigenschaft aufweisen.

Es ist im Sinne der Erfindung bevorzugt, dass die Antriebsräder ganz oder teilweise verschiebbar angeordnet sind. Es ist im Sinne der Erfindung ganz besonders bevorzugt, dass mindestens ein Antriebsrad, das Bestandteil des Seilspeichers ist, verschiebbar ausgebildet ist. Der Begriff «verschiebbar" bedeutet im Sinne der Erfindung bevorzugt, dass der Abstand von zwei Rollen einer Speicherebene veränderbar ist, d.h. verändert werden kann. Die Formulierung, dass die «Antriebsräder ganz oder teilweise verschiebbar angeordnet sind», bedeutet im Sinne der Erfindung bevorzugt, dass mindestens eines der Antriebsräder beweglich angeordnet ist und verschoben werden kann. Selbstverständlich können auch zwei, drei oder alle Antriebsräder der Seilsäge verschiebbar angeordnet sein.

Es ist im Sinne der Erfindung bevorzugt, dass die Seilsäge Umlenkrollen aufweist, die zwischen den Antriebsmotoren angeordnet werden können. Es ist im Sinne der Erfindung ganz besonders bevorzugt, dass zwischen zwei oder mehr Antriebsmotoren Umlenkrollen angeordnet sind. Vorzugsweise dienen Umlenkrollen zur Richtungsänderung des Sägeseils. Mit anderen Worten sind Umlenkrollen dazu eingerichtet, Richtungsänderungen des Sägeseils zu bewirken. Umlenkrollen können auch angetrieben werden, wodurch sie zu Antriebsrädern werden. Beispielsweise können solche angetriebenen Umlenkrollen mit einem Antrieb versehen sein. Es ist im Sinne der Erfindung bevorzugt, dass jedes Antriebsrad auch einen Umlenkrolle ist, wobei aber eine Umlenkrolle nicht zwangsläufig ein Antriebsrad ist.

Häufig sind im Stand der Technik die angetriebenen Rollen nebeneinander, d.h. in mehreren Speicherebenen, auf einer gemeinsamen Achse angeordnet. Dadurch ändert sich bei unterschiedlicher Speicherbelegung auch die Anzahl der mit dem Sägeseil in Kontakt stehenden angetriebenen Rollen. Von einer solchen Ausgestaltung wendet sich die vorliegende Erfindung gerade ab, indem eine Anzahl der Antriebsräder, die in Kontakt mit dem Sägeseil stehen, unabhängig von einer Belegung des Seilspeichers ist.

In einem zweiten Aspekt betrifft die Erfindung ein Verfahren zum Betrieb einer Seilsäge, wobei die Seilsäge mindestens drei Antriebsräder zur Übertragung einer Antriebskraft auf eine Sägeseil der Seilsäge aufweist, wobei eine Anzahl der Antriebsräder, die in Kontakt mit dem Sägeseil stehen, unabhängig ist von einer Belegung des Seilspeichers. Die für die Seilsäge eingeführten Begriffe, Definitionen und technischen Vorteile gelten für das vorgeschlagene Betriebsverfahren analog.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: Ansicht einer bevorzugten Ausgestaltung der vorgeschlagenen Seilsäge, bei der die Antriebsräder in einer Ebene liegen
- Fig. 2: Ansicht einer bevorzugten Ausgestaltung der vorgeschlagenen Seilsäge, bei der zumindest zwei der Antriebsräder in unterschiedlichen Ebenen liegen
- Fig. 3: Draufsicht einer bevorzugten Ausgestaltung der vorgeschlagenen Seilsäge
- Fig. 4: Ansicht einer bevorzugten Ausgestaltung der vorgeschlagenen Seilsäge, bei der zumindest eines der Antriebsräder verschiebbar ausgebildet ist

### Ausführungsbeispiele und Figurenbeschreibung:

Figur 1 zeigt eine bevorzugte Ausgestaltung der vorgeschlagenen Seilsäge 10. Die Seilsäge 10 umfasst einen Seilantrieb 12 und einen Seilspeicher 14, wobei der Seilspeicher 14 Antriebsräder 20-24 und/oder Umlenkrollen 40 umfassen kann. Der Seilantrieb 12 und der Seilspeicher 14 liegen vorzugsweise an einer Antriebs- und Speichereinheit der Seilsäge 10 angeordnet vor, wobei die Antriebs- und Speichereinheit vorzugsweise einen Hauptkörper der Seilsäge 10 bildet. Der Seilspeicher 14 ist dazu eingerichtet, das Sägeseil 16 der Seilsäge 10 aufzunehmen und zu speichern. Mit dem Seilantrieb 12 kann das Sägeseil 16 angetrieben werden.

Das in Figur 1 dargestellte Ausführungsbeispiel der Seilsäge 10 umfasst ein erstes Antriebsrad 20, dem ein erster Antriebsmotor 30 zugeordnet werden kann. Darüber hinaus umfasst die Seilsäge 10, die in Figur 1 gezeigt wird, ein zweites Antriebsrad 22, dem ein zweiter Antriebsmotor 32 zugeordnet werden kann. Darüber hinaus umfasst die Seilsäge 10, die in Figur 1 gezeigt wird, ein drittes Antriebsrad 24, dem ein dritter Antriebsmotor 34 zugeordnet werden kann. In dem in Figur 1 dargestellten Ausführungsbeispiel der Erfindung ist eine Umlenkrolle 40 dargestellt, die im Sinne der Erfindung bevorzugt als «erste Umlenkrolle 40» bezeichnet wird.

Dahingegen sind in dem in Figur 2 dargestellten Ausführungsbeispiel der Erfindung zwei Umlenkrollen 40, 42 dargestellt, die im Kontext der Erfindung als erste Umlenkrolle 40 und als zweite Umlenkrolle 42 bezeichnet werden. Die Umlenkrollen 40, 42 können vorzugsweise zwischen den Antriebsrändern 20-24 und/oder den Antriebsmotoren 30-34 der Seilsäge 10 angeordnet vorliegen. Das Sägeseil 16 wird zunächst um das erste Antriebsrad 20 herumgeführt, bevor es weiter um das zweite Antriebsrad 22, die erste Umlenkrolle 40, das dritte Antriebsrad 24 und die zweite Umlenkrolle 42 geführt wird. Durch die Führung des Sägeseils 16 kann das Sägeseil 16 gestrafft werden, so dass es stets unter Spannung steht und damit betriebsbereit ist.

Figur 2 zeigt eine bevorzugte Ausgestaltung der vorgeschlagenen Seilsäge 10, bei der zumindest zwei der Antriebsräder 20-24 in unterschiedlichen Ebenen E1, E2 des Seilspeichers liegen. Dabei wird das Sägeseil 16 zunächst um das erste Antriebsrad 20 und das zweite Antriebsrad 22 herumgeführt, bevor das Sägeseil 16 anschließend um die erste Umlenkrolle 40 in Richtung des dritten Antriebsrads 24 geführt wird. Von dort wird das Sägeseil 16 weiter in Richtung der zweiten Umlenkrolle 42 geführt. Auch bei dem in Figur 2 dargestellten Ausführungsbeispiel der Erfindung ist jedem Antriebsrad 20-24 je ein Antriebsmotor 30-34 zugeordnet.

Es ist im Sinne der Erfindung bevorzugt, dass die Antriebsräder 20, 22, 24 in unterschiedlichen Ebenen E1, E2 angeordnet vorliegen. Die Lage solcher Ebenen E1, E2 wird insbesondere in Figur 2 verdeutlicht. In Figur 1 liegen die Antriebsräder 20, 22 und 24 in einer Ebene E1 angeordnet vor. Im Gegensatz dazu liegen in Figur 2 die Antriebsräder 20 und 22 in einer ersten Ebene E1 und das Antriebsrad 24 in einer zweiten Ebene E2 angeordnet vor. Die Umlenkung des Sägeseils 16 auf die zweite Ebene E2 wird bei dem in Figur 2 dargestellten Ausführungsbeispiel der Erfindung durch die schräg gestellte erste Umlenkrolle 40 erreicht. Wenn die Seilsäge 10 - wie in Figur 1 - nur eine Seillaufebene E1 aufweist, ist die erste Umlenkrolle 40 in der Regel nicht schräg gestellt.

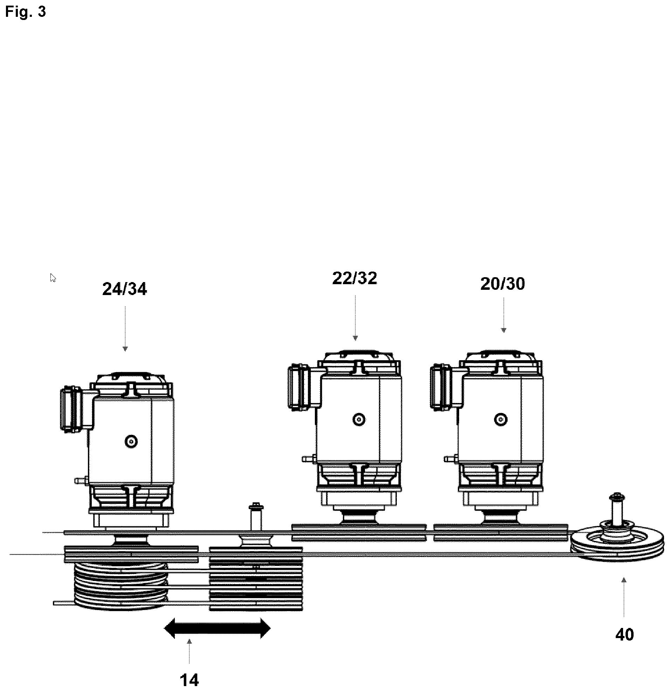

Figur 3 zeigt insbesondere eine Draufsicht einer bevorzugten Ausgestaltung der vorgeschlagenen Seilsäge 10.

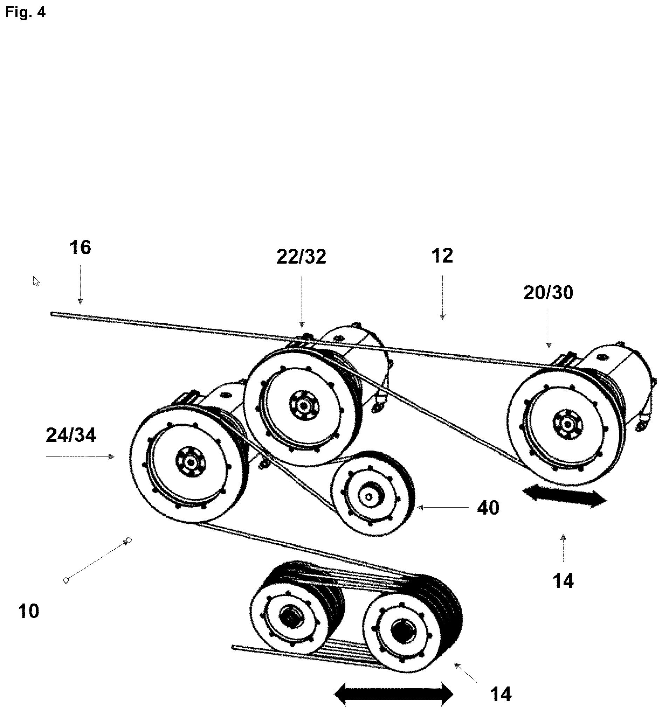

Figur 4 zeigt eine bevorzugte Ausgestaltung der vorgeschlagenen Seilsäge 10, bei der zumindest eines der Antriebsräder 20-24 verschiebbar ausgebildet ist. In dem in Figur 4 dargestellten Ausführungsbeispiel der Erfindung ist das erste Antriebsrad 20 verschiebbar ausgebildet. Dies wird in Figur 4 insbesondere durch den Doppelpfeil angedeutet. Der Doppelpfeil soll vorzugsweise auch symbolisieren, dass das erste Antriebsrad 20 in eine Vorwärts-Rückwärts-Richtung beweglich ausgebildet ist, mit anderen Worten kann das erste Antriebsrad 20 in einer horizontal verlaufenden Richtung hin und her verschoben werden. In dem in Figur 4 dargestellten Ausführungsbeispiel der Erfindung wird das Sägeseil 16 über das erste Antriebsrad 20, in Richtung des zweiten Antriebsrads 22 geführt und weiter über die erste Umlenkrolle 40 in Richtung des dritten Antriebsrads 24 und weiter zur zweiten Umlenkrolle 42. Auch bei dem in Figur 4 dargestellten Ausführungsbeispiel der Erfindung ist jedem Antriebsrad 20-24 je ein Antriebsmotor 30-34 zugeordnet.

### Bezugszeichenliste

- 10: Seilsäge
- 12: Seilantrieb
- 14: Seilspeicher
- 16: Sägeseil
- 20: erstes Antriebsrad
- 22: zweites Antriebsrad
- 24: drittes Antriebsrad
- 30: erster Antriebsmotor
- 32: zweiter Antriebsmotor
- 34: dritter Antriebsmotor
- 40: erste Umlenkrolle
- 42: zweite Umlenkrolle
- E1: erste Ebene
- E2: zweite Ebene

## Patentansprüche

1. Seilsäge (10) mit einem Seilantrieb (12) und einem Seilspeicher (14) für ein Sägeseil (16),
**dadurch gekennzeichnet, dass**
die Seilsäge (10) mindestens drei Antriebsräder (20, 22, 24) zur Übertragung einer Antriebskraft auf ein Sägeseil (16) aufweist, wobei eine Anzahl der Antriebsräder (20, 22, 24), die in Kontakt mit dem Sägeseil (16) stehen, unabhängig ist von einer Belegung des Seilspeichers (14).

2. Seilsäge (10) nach Anspruch 1
**dadurch gekennzeichnet, dass**
die mindestens drei Antriebsräder (20, 22, 24) in einer Ebene E1 angeordnet vorliegen.

3. Seilsäge (10) nach Anspruch 1
**dadurch gekennzeichnet, dass**
mindestens zwei Antriebsräder (20, 22 oder 24) in unterschiedlichen Ebenen E1, E2 angeordnet vorliegen.

4. Seilsäge (10) nach einem der vorhergehenden Ansprüche
**dadurch gekennzeichnet, dass**
die Seilsäge (10) für die Antriebsräder (20, 22, 24) jeweils einen eigenen Antriebsmotor (30, 32, 34) aufweist.

5. Seilsäge (10) nach einem der Ansprüche 1 bis 3
**dadurch gekennzeichnet, dass**
die Antriebsmotoren (30, 32, 34) der Seilsäge (10) dazu eingerichtet sind, mehr als ein Antriebsrad (20, 22, 24) anzutreiben.

6. Seilsäge (10) nach einem der vorhergehenden Ansprüche
**dadurch gekennzeichnet, dass**
die Antriebsräder (20, 22, 24) ganz oder teilweise Bestandteil des Seilspeichers (14) sind.

7. Seilsäge (10) nach einem der vorhergehenden Ansprüche
**dadurch gekennzeichnet, dass**
die Antriebsräder (20, 22, 24) ganz oder teilweise verschiebbar angeordnet sind.

8. Seilsäge (10) nach einem der Ansprüche 4 bis 7
**dadurch gekennzeichnet, dass**
die Seilsäge (10) Umlenkrollen (40, 42) aufweist, die zwischen den Antriebsmotoren (30, 32, 34) angeordnet werden können.

9. Verfahren zum Betrieb einer Seilsäge (10) nach einem der vorhergehenden Ansprüche **dadurch gekennzeichnet, dass**
die Seilsäge (10) mindestens drei Antriebsräder (20, 22, 24) zur Übertragung einer Antriebskraft auf ein Sägeseil (16) aufweist, wobei eine Anzahl der Antriebsräder (20, 22, 24), die in Kontakt mit dem Sägeseil (16) stehen, unabhängig ist von einer Belegung des Seilspeichers (14).
